Europäisches Patentamt

European Patent Office

Office européen des brevets

(11) Publication number: **0 194 069**
**A2**

(12) ## EUROPEAN PATENT APPLICATION

(21) Application number: 86301144.1

(51) Int. Cl.4: **B60C 11/04** , B60C 11/08

(22) Date of filing: **19.02.86**

(30) Priority: **02.03.85 GB 8505414**

(43) Date of publication of application:
**10.09.86 Bulletin 86/37**

(84) Designated Contracting States:
**DE FR GB**

(71) Applicant: **SP TYRES UK LIMITED**
**Fort Dunlop**
**Erdington Birmingham B24 9QT(GB)**

(72) Inventor: **Williams, Arthur Roger**
**29 Walcot Green Dorridge**
**Solihull West Midlands(GB)**

(74) Representative: **Stewart, Charles Geoffrey**
**SP TYRES UK LIMITED Tyre Technical Division**
**Fort Dunlop Birmingham B24 9QT(GB)**

(54) **Improvements to wheel driven vehicles and radial tyres therefore.**

(57) A wheel driven vehicle having a driven (1) and a non-driven (2) wheel both provided with pneumatic tyres having directional patterns formed by V-shaped groove arrangements and fitted to the vehicle such that on the non-driven wheels - (1) the centre of the V-shaped pattern enters the contact patch first and on the driven wheel (2) the centre of the V enters the contact patch last. The invention also provides a tyre for the vehicle having an improved reinforced directional tread pattern.

Fig.1.

EP 0 194 069 A2

## IMPROVEMENTS TO WHEEL DRIVEN VEHICLES AND RADIAL TYRES THEREFORE

This invention relates to wheel driven vehicles and tyres therefore and particularly to heavy vehicles having at least one driven axle and one non-driven axle.

Hitherto the tyres for driven and non-driven axles have been constructed with similar carcasses and breaker reinforcements but the tyre tread patterns have become progressively more different. Non-driven axles which are often also steering axles have been given simple long life tread patterns designed primarily to avoid uneven wear and give a worn tyre most suitable for retreading and subsequent further use. This design objective has, however, resulted in tyres which have substantially reduced grip in wet conditions when the tyre tread is more than half worn. Drive axle tyres have in contrast developed tough tread designs to minimise pattern movement and resultant heating whilst giving good grip/traction but at the sacrifice of even wear properties. The drive and non-drive tyres have also evolved with different tread compounds again to optimise the above properties.

Special purpose tyre tread patterns have already been developed including patterns having a directional nature to improve water removal from the ground contact patch. Such a pattern is disclosed in UK Patent Specification Number 2046188 and European Pattern Application Number 64934 but such special patterns have only been used for high performance cars for wet grip properties.

One object of the present invention is to provide a vehicle having tyres of the same special tread pattern for both drive and non-drive axles arranged on the vehicle to give improved tyre performance including tyre life. Another object is to provide a tyre tread pattern designed particularly for this application.

According to one aspect of the present invention a wheel driven vehicle having at least one driven wheel and one non-driven wheel each provided with a pneumatic radial tyre wherein the tyres have the same tread pattern, said pattern being a direction pattern comprising two sets of circumferentially spaced lateral grooves one set extending to either side of the centre region of the tread, each groove having an axially inner and an axially outer end, the axially inner end of every groove being circumferentially spaced in the same direction from its associated axially outer end so that the grooves provide a V-shaped directional tread pattern, wherein the tyres are positioned on the vehicle such that the tread pattern on the non-driven wheel has the centre of the V-shaped pattern of grooves in front of the outer ends of the grooves so that the centre enters the contact patch with the ground first and the driven wheel has the centre of the V-shaped pattern of grooves behind the axially outer ends so that the axially outer ends of the grooves enter the contact patch first.

The vehicle may have the non-driven axle steerable or the driven axle steerable. More than two axles may be provided in which case the tyres are fitted with only the driven wheels having tyres fitted so that the outer ends of the grooves enter the contact patch first. In the case of multi-axle vehicles two or more axles may be driven.

The particular tyre arrangement of the invention provides in a heavy vehicle such as a multi-axle truck from a single tyre tread pattern greatly increased wet grip under normal steady running for all non-driven axles where the V-shaped formation carries water from the centre of the contact patch to the edges of the tyre and avoids aquaplaning and at the same time provides for the driven axle, which transmits substantial torque for long periods, a pattern which gives good grip but more importantly which generates inwardly directed forces in the tread pattern. The inwardly directed forces result in the retention of groove clearance as required.

A second aspect of the invention provides a tyre having an improved directional tread pattern which comprises at each side of the centreline of the tread pattern a plurality of parallel laterally extending tread regions each having leading and trailing edges and being spaced apart circumferentially of the tyre by parallel lateral grooves which extend at an acute angle to the centreline of the tread pattern such that the grooves to either side are in a 'V' formation and the leading edge of each tread region is reinforced to provide increased resistance to tearing of the tread regions at the grooves.

Preferably the reinforcement at the leading edges comprises additional rubber tread compound adjacent the leading edge by, for example, sloping the leading edge at an angle of substantially less than the usual 80-85° to the tread surface. An alternative reinforcement means is to provide along the groove adjacent to the leading edge a rubber buttress of lower height than the full tread depth.

The tread pattern may comprise continuous laterally extending tread regions to give a full 'V' shaped pattern or more preferably each tread region is formed by a series of tread blocks, each reinforced at the leading edge. A solid circumferentially extending centre rib may also be provided to provide further improved tread stability and thus vehicle handling.

The lateral tread regions or blocks may be siped on the leading edges and additionally they may be siped on the axially outer edges. (By sipes are meant short, part or full depth narrow knife cuts into the tread.) The sipes are grouped and positioned so as to minimise heel and toe wear and also side shoulder wear.

The tread blocks may also have closed end sipes within the ground contacting areas.

Further aspects of the present invention will be apparent from the following description, by way of example only, of one embodiment of the invention in conjunction with the attached diagrammatic drawings in which:-

Fig 1 is a top view of a vehicle with tyres fitted according to the invention.

Fig 2 is a plan view of a section of tyre tread.

Fig 3 is a cross section on the line III -III of Fig 2.

Fig 4 is an alternative groove cross section.

The vehicle shown comprises a 4 wheel vehicle such as a car or truck having a pair of steerable front wheels 1 and 2 and a pair of driven rear wheels 3 and 4. The tyres are all of the directional pattern type as will be described below and are fitted with the 'V' shaped pattern arranged such that on the front wheels the point of the 'V' enters the contact patch first in normal forward movement of the vehicle arrow A. The rear tyres are fitted in the opposite direction.

The tyres each have a tread pattern as shown in Fig 2 and the pattern comprises a centre rib 5 which is a zig zag rib of rubber along the circumferential centreline of the tread. At either side of the centre rib 5 there is a zig zag groove 6 and then a set of two blocks 7 and 8. The blocks 7 and 8 are arranged at an acute angle to the centreline of the tread so that between each set of blocks 7, 8 and its neighbouring set of blocks a laterally extending groove 9 is formed. The two sets of grooves 9 are arranged in a 'V' formation by each being at an acute angle A to the centreline of the tread CL.

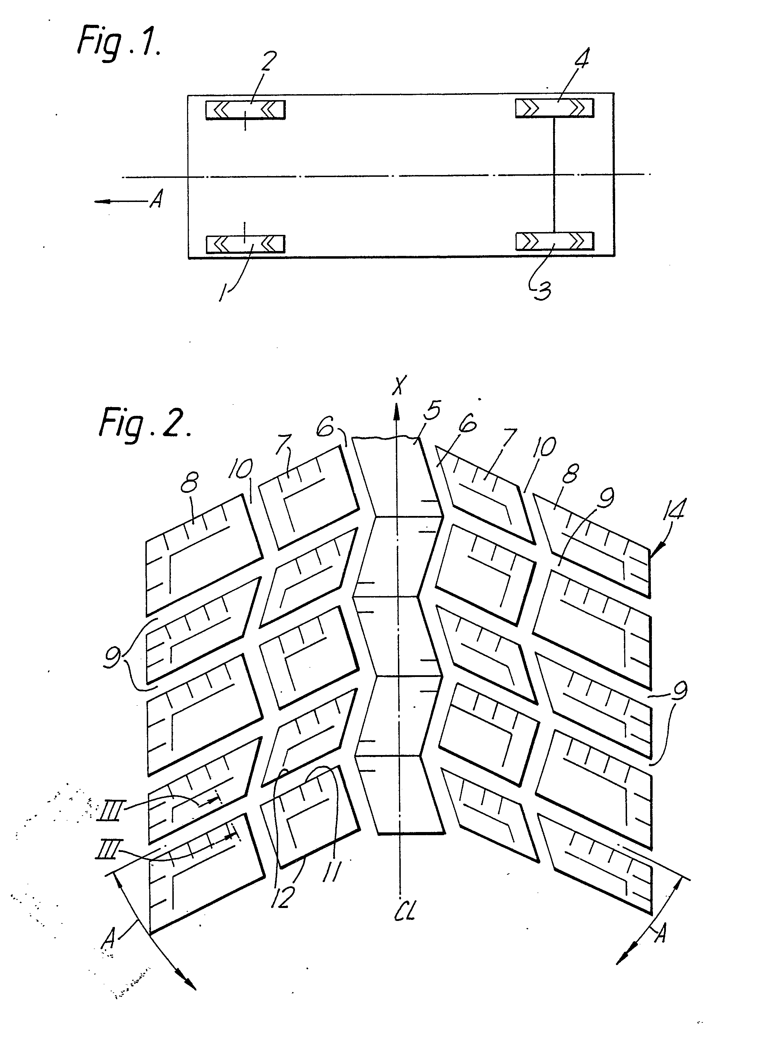

Each set of blocks 7 and 8 are separated by circumferential grooves 10 and thus the overall pattern is a block pattern with laterally extending water carrying grooves which sweep backwardly through the rolling contact patch as the tyre runs on a front i.e. non-driven wheel (wheels 1 and 2 in Fig 1).

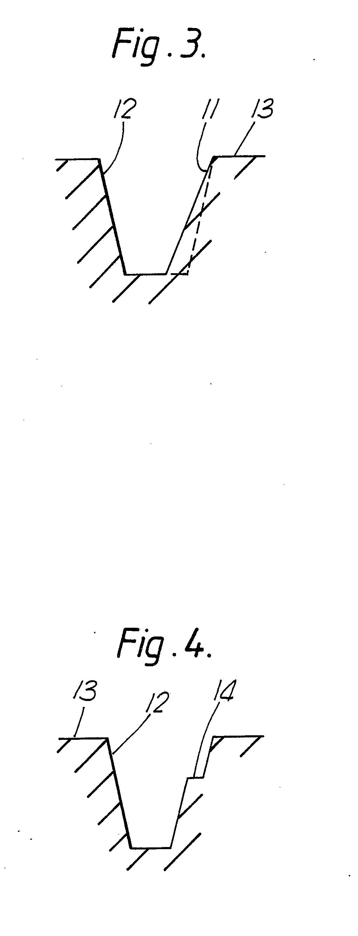

Each block has a leading edge 11 and a trailing edge 12. The edge 11 is at an acute angle of 60° to the tread surface 13 and the trailing edge 12 is at an angle of 80° to the tread surface 13 as shown in Fig 3. Thus the leading edge of each block 11 has more rubber supporting it and it is therefore more supportive of the block.

Finally the leading edge 11 of each block has 3 or 4 sipes or knife cuts into the block perpendicular to the block edge 11 and the blocks 8 at the tread shoulders 14 have two sipes cut into them again perpendicular to the block edges.

In use of the vehicle the tyre damaging torque force on the front wheels is the braking torque and with the tyres fitted as shown the tyre tread enters the contact patch with the point of the 'V' formation first. (Direction X in Fig 2.) This gives the best direction for water clearance when road conditions are wet but in addition the braking torque acts through the tyre carcass to the tread and this applies substantial forces in the X direction to the blocks and thus the forces face the blocks in the direction X. The additional support for the blocks of the invention provides improved resistance to block/groove base cracking. Rubber acts well under compression and the tread is able to effectively withstand the forces with much less likelihood of block base cracking than in conventional non directional patterns.

The arrangement on the drive axles points the treads in the best direction to withstand the dominant tractive torque force and the resultant single tread pattern is effective for both types of axle even in heavy truck usage.

The sipes act to reduce heel and toe wear on the blocks and to reduce shoulder wear in conventional manner.

Alternative support means such as the buttress 14 shown in Fig 4 may be used. In this construction the groove side faces are all at 80° and the buttress 14 provides the additional support. Other known support means may also be used including varying angles along the grooves.

The tread pattern need not have the entire lateral grooves 9 at an acute angle and may have part of the grooves at 90° to the circumferential direction. Finally the tread pattern need not be a block pattern as long as there are directional grooves to either side of the pattern.

**Claims**

1 A wheel driven vehicle having at least one driven wheel (3, 4) and one non-driven wheel (1, 2) each provided with a pneumatic radial tyre wherein the tyres have the same tread pattern, said pattern being a directional pattern comprising two sets of circumferentially spaced lateral grooves (a) one set extruding to either side of the centre region of the tread, each groove (a) having an axially inner and an axially outer end, the axially inner end of every groove being circumferentially spaced in the same direction from its associated axially outer end so that the grooves (a) provide a V-shaped directional tread pattern, characterised in that the tyres are positioned on the vehicle such that the tread pattern on the non-driven wheel (1, 2) has the centre of the V-shaped pattern of grooves (a) in front of the outer ends of the grooves so that the centre enters the contact patch with the ground first and the driven wheel (3, 4) has the centre of the V-shaped pattern of grooves behind the axially outer ends so that the axially outer ends of the grooves (a) enter the contact patch first.

2 A vehicle according to claim 1 characterised in that the driven axle wheels (3, 4) are steerable wheels.

3 A vehicle according to claim 1 characterised in that the driven axle wheels (3, 4) are not steerable wheels.

4 A vehicle according to claim 1, 2 or claim 3 characterised in that the vehicle is a multi-axle vehicle having three or more axles each with a pair of wheels.

5 A tyre for a vehicle according to claim 1 having an improved directional tread pattern characterised by at each side of the centreline (X) of the tread pattern a plurality of parallel laterally extending tread regions (7, 8) each having leading (11) and trailing (12) edges and being spaced apart of the tyre by parallel lateral grooves (a) which extend at an acute angle to the centreline (X) of the tread pattern such that the grooves (a) to either side are in V-formation and the leading angle of each tread region is reinforced to provide increased resistance to tearing of the tread regions at the grooves.

6 A tyre according to claim 5 characterised by the reinforcement at the leading edges comprising additional rubber tread compound adjacent to the leading edge.

7 A tyre according to claim 6 characterised in that the additional rubber tread compound is provided by means of sloping the leading edge (11) at an angle of substantially less than the usual 80° to the tread surface such that the leading edge slope is substantially less than the trailing edge slope.

8 A tyre according to claim 6 characterised in that the additional rubber tread compound is provided by providing along the groove adjacent to the leading edge a rubber buttress (14) of lower height than the full tread depth.

9 A tyre according to anyone of claims 5 to 8 characterised in that the tread region is formed by a series of tread blocks (7, 8), each reinforced at the leading edge (11).

10 A tyre according to anyone of claims 5 to 9 characterised in that a solid circumferentially extending centre rib (5) is provided.

11 A tyre according to anyone of claims 5 to 10 characterised in that the tread regions or blocks are siped on the leading edge (11).

**Fig .1.**

**Fig .2.**

0 194 069

Fig . 3.

Fig . 4.